# EUROPÄISCHE PATENTANMELDUNG

(11) **EP 1 084 651 A1**
(43) Veröffentlichungstag der Anmeldung: **21.03.2001**
(21) Anmeldenummer: 00118402.7
(22) Anmeldetag: 24.08.2000
(51) Int. Cl.: A47B 21/00, F16M 11/24

(54) **Computerständer**

(30) Priorität: 13.09.1999 DE 19943804
(71) Anmelder: Foco - Cubus Verwaltungs-GmbH, 81373 München (DE)
(72) Erfinder: Kottek, Stephan, 81737 München (DE); Siegert, Florian, 81545 München (DE); Janus, Steffen, 80331 München (DE); Littmann, Oliver, 80337 München (DE)
(74) Vertreter: Körfer, Thomas

(57) **Zusammenfassung**

Ein Computerständer (1) insbesondere für einen Terminal zum Zugriff auf Daten eines elektronischen Rechners, weist eine Bildschirmhaltevorrichtung (2) zum Befestigen eines elektronischen Sichtgerätes (3) an dem Computerständer (10) und eine Tastaturhaltevorrichtung (14) zum Befestigen einer Tastatur (16) an dem Computerständer (1) auf, wobei die Bildschirmhaltevorrichtung (2) und die Tastaturhaltevorrichtung (14) höhenverstellbar angeordnet sind. Dabei sind zwei Befestigungsstützen (8, 9) vorgesehen, die jeweils an im wesentlichen gegenüberliegenden Verbindungsstellen mit der Bildschirmhaltevorrichtung (2) und der Tastaturhaltevorrichtung (14) verbunden sind. Außerdem sind die Befestigungsstützen (8, 9) zumindest mittelbar mit einem Rechnerschutzgehäuse (30) zum Aufnehmen eines elektronischen Rechners verbunden.

## Beschreibung

Die Erfindung geht aus von einem Computerständer nach der Gattung des Hauptanspruchs.

Aus der DE 196 42 425 A1 ist ein Computerständer nach der Gattung des Hauptanspruchs bekannt. Der aus dieser Druckschrift hervorgehende Computerständer weist mehrere Haltevorrichtungen auf, die an einer Tragsäule höhenverstellbar angeordnet sind. Die Haltevorrichtungen sind dabei als ggf. teleskopierbare Dreh- und Schwenkarme ausgebildet, die mit einer Platte verbunden sind, auf die sich z. B. ein Monitor, ein Drucker oder eine Tastatur stellen lassen. Die Tragsäule ist auf einer mittels Gleitrollen verfahrbaren Fußkonstruktion gelagert, wobei die Gleitrollen versenkbar sind, um die Tragsäule zu arretieren.

Der aus der DE 196 42 425 A1 bekannte Computerständer hat den Nachteil, daß er, da alle Haltevorrichtungen an einer einzelnen Tragsäule angeordnet sind, nur eine geringe Stabilität aufweist. Werden z. B. alle Haltevorrichtungen auf eine Seite gedreht oder wird eine Haltevorrichtung mit einer schweren Komponente, wie z. B. einem großen Röhrenbildschirm belastet, so kippt der Computerständer um. Diese Situation ist auch dann gegeben, wenn sich ein Benutzer z. B. im Stehen auf eine der Haltevorrichtungen aufstützt. Die Instabilität des bekannten Computerständers ist von besonderem Nachteil, da einzelne Komponente eines Rechners, wie z. B. ein Festplattenlaufwerk, äußerst empfindlich auf Stöße und Neigungsveränderungen während des Betriebs reagieren.

Der bekannte Computerständer ist außerdem ungeeignet, wenn ein Terminal zum Zugriff auf Daten eines elektronischen Rechners für Dritte bereitgestellt werden soll. Da alle Hardware-Komponenten eines Rechners bei erfindungsgemäßer Anwendung des bekannten Computerständers der Benutzerperson zugänglich sind, erhalten Dritte einen Gesamtzugriff auf das System, der meist nicht erwünscht ist. So können diese z. B. den Computer neu starten und anschließend wesentliche Systemparameter des Rechners verändern. Außerdem können Computerviren über mitgebrachte Disketten auf den Rechner übertragen werden. Des weiteren bietet der bekannte Computerständer keinen Schutz vor Umwelteinflüssen, Diebstahl oder Vandalismus.

Der bekannte Computerständer ist daher nicht für den kommerziellen Bereich oder zur Bereitstellung eines Terminals für einen Zugriff Dritter auf Daten eines elektronischen Rechners geeignet.

Aus der DE 197 31 440 A1 ist ein Computerständer bekannt, der aus einer mit einem Tellerfuß verbundenen Standsäule besteht, in die Haltevorrichtungen einhängbar sind. Das Einhängen erfolgt dabei in verschiedenen Höhenstufen mit vorgegebenem Rastermaß. Zum Einhängen werden Schnellverschlüsse vorgeschlagen, die beispielsweise in Form einer einfachen Doppelhakenausbildung an der Haltevorrichtung, die in entsprechende Aufhängungen an der Standsäule eingeführt und eingehakt werden können, ausgebildet sind.

Aufgabe der Erfindung ist es, einen Computerständer zu schaffen, der eine hohe Standfestigkeit aufweist, einen Schutz vor einem unberechtigten Zugriff auf Hardware-Komponenten eines elektronischen Rechners ermöglicht und sich insbesondere für die Bereitstellung eines Rechners zur Benutzung durch Dritte, z. B. eines Internet-Computers oder eines Informationsrechners, eignet.

Die Aufgabe wird durch die Merkmale des Hauptanspruchs gelöst. Vorteilhafte Weiterbildungen der im Hauptanspruch angegebenen Erfindung sind durch die in den Unteransprüchen aufgeführten Maßnahmen gegeben.

Der erfindungsgemäße Computerständer hat den Vorteil, daß er unabhängig von der Größe und dem Gewicht des elektronischen Sichtgerätes, des elektronischen Rechners und anderer Komponenten gleichbleibend stabil steht und ein Verkippen oder Umstoßen des Computerständers auch durch Aufstützen oder Anlehnen nicht möglich ist. Außerdem wird der Rechner durch das Rechnerschutzgehäuse gegen Umwelteinflüsse und einen unberechtigten Zugriff geschützt.

In vorteilhafter Weise weist das Rechnerschutzgehäuse eine abnehmbare Vorderwand und eine abnehmbare Rückwand auf, die mit Schließvorrichtungen sicherbar sind. Damit wird der Schutz des Rechners vor einem unberechtigten Zugriff weiter verbessert. Dadurch eignet sich der Computerständer insbesondere zum unbeaufsichtigten Bereitstellen eines Terminals zum Zugriff auf Daten eines elektronischen Rechners.

Vorteilhaft ist es, daß die Bildschirmhaltevorrichtung die Tastaturhaltevorrichtung und das Rechnerschutzgehäuse mittels flexiblen Kabelführungen miteinander verbunden sind. Dadurch sind zum einen die Kabel gebündelt und aufgeräumt, was einen besseren optischen Eindruck vermittelt und ein versehentliches Unterbrechen einer Kabelverbindung verhindert. Zum anderen können die Kabel besser gegen Beschädigung und Umwelteinflüsse geschützt werden. Durch die flexible Ausgestaltung der Kabelführungen ist außerdem eine Höhenverstellbarkeit der Bildschirmhaltevorrichtung und der Tastaturhaltevorrichtung gewährleistet.

Besonders vorteilhaft ist es, daß die Tastaturhaltevorrichtung mit der Bildschirmhaltevorrichtung mittels einer flexiblen ersten Kabelführung verbunden ist und daß die Bildschirmhaltevorrichtung mit dem Rechnerschutzgehäuse mittels einer flexiblen zweiten Kabelführung verbunden ist. Da im allgemeinen die Tastatur näher am Sichtgerät als am Rechner angeordnet ist, kann dadurch die Länge der Kabelführungen verringert werden. Außerdem läßt sich die Länge der Kabelführung zwischen der Tastaturhaltevorrichtung und der Bildschirmhaltevorrichtung optimieren, da bei einer Höhenverstellung des Sichtgerätes die Tastatur im allgemeinen in der gleichen Richtung verstellt wird und sich somit der Abstand zwischen dem Sichtgerät und der Tastatur weniger ändert als der Abstand zwischen dem Rechner und der Tastatur.

In vorteilhafter Weise ist die Bildschirmhaltevorrichtung und/oder die Tastaturhaltevorrichtung zum Neigen des Sichtgerätes bzw. der Tastatur um eine Drehachse drehbar. Dadurch kann ein Benutzer den Blickwinkel zu dem Sichtgerät auf seine persönlichen Bedürfnisse einstellen, was insbesondere bei Flüssigkristallbildschirmen erforderlich ist. Außerdem wird ein ergonomisches Arbeiten an Tastatur und Bildschirm ermöglicht.

Vorteilhaft ist es, daß die Bildschirmhaltevorrichtung und/oder die Tastaturhaltevorrichtung einen Griff zum präzisen Einstellen der Neigung des Sichtgerätes bzw. der Tastatur aufweist. Ein Griff an der Tastaturhaltevorrichtung kann dabei zusätzlich als Handballenauflage dienen. Ein Griff an der Bildschirmhaltevorrichtung schützt außerdem den Bildschirm des Sichtgerätes vor einer versehentlichen Berührung.

Vorteilhaft ist es, daß die Bildschirmhaltevorrichtung und die Tastaturhaltevorrichtung mittels eines starren Verbindungselementes verbunden sind, wodurch eine Bildschirm-Tastatur-Einheit gebildet ist. Dadurch lassen sich das Sichtgerät und die Tastatur gemeinsam in der Höhe verstellen.

In vorteilhafter Weise ist eine Höhenverstellung der Bildschirm-Tastatur-Einheit mittels einer Bremsanlage blockierbar. Dadurch wird insbesondere beim Bedienen der Tastatur ein ungewolltes Höhenverstellen der Bildschirm-Tastatur-Einheit verhindert.

Vorteilhaft ist es, daß die Bildschirm-Tastatur-Einheit zur Höhenverstellung der Bildschirm-Tastatur-Einheit einen Griff aufweist und daß der Griff einen Schalter aufweist, der ein Lösen der Bremsen der Bremsanlage ermöglicht. Dadurch wird ein Verstellen der Bildschirm-Tastatur-Einheit mittels des Griffs erleichtert, da das Lösen der Bremsen der Bremsanlage vom Griff aus erfolgt.

Vorteilhaft ist es, daß zur Entlastung der Bremsen der Bremsanlage ein Gegengewicht auf zwei mit der Bildschirm-Tastatur-Einheit verbundene, jeweils entlang der Befestigungsstützen laufende Ketten oder Seile einwirkt. Dadurch wird zum einen die benötigte Haltekraft der Bremse verringert und zum anderen kann durch geeignete Wahl des Gegengewichtes das Gewicht der Bildschirm-Tastatur-Einheit kompensiert werden, so daß eine Höhenverstellung der Bildschirm-Tastatur-Einheit mit minimalen Kraftaufwand erfolgen kann.

In vorteilhafter Weise sind die Bildschirm-Tastatur-Einheit und das Gegengewicht mittels in Aussparungen der Stützsäulen angeordneten Rollenführungen geführt. Dadurch wird die Höhenverstellbarkeit der Bildschirm-Tastatur-Einheit weiter verbessert.

Ausführungsbeispiele der Erfindung sind in den Zeichnungen vereinfacht dargestellt und in der nachfolgenden Beschreibung näher erläutert. Es zeigen:
- Fig. 1: eine perspektivische Ansicht eines ersten Ausführungsbeispiels eines erfindungsgemäßen Computerständers;
- Fig. 2: den in Fig. 1 mit II bezeichneten Ausschnitt;
- Fig. 3: den in Fig. 1 mit III bezeichneten Ausschnitt in einer Ansicht von hinten;
- Fig. 4: ein zweites Ausführungsbeispiel des erfindungsgemäßen Computerständers;
- Fig. 5: den in Fig. 4 mit V bezeichneten Ausschnitt;
- Fig. 6: den in Fig. 4 mit VI bezeichneten Ausschnitt in einer Ansicht von hinten;
- Fig. 7A: einen vertikalen Schnitt durch eine Befestigungsstütze des zweiten Ausführungsbeispiels, in der Rollenführungen angeordnet sind, derer eine mit einem Gegengewicht verbunden ist;
- Fig. 7B: einen horizontalen Schnitt durch eine Befestigungsstütze des zweiten Ausführungsbeispiels, in der Rollenführung einer weiteren Ausführungsform angeordnet sind
- Fig. 8: den in Fig. 4 mit VIII bezeichneten Ausschnitt in einer Ansicht von schräg oben; und
- Fig. 9: die Bildschirmhaltevorrichtung des Computerständers des zweiten Ausführungsbeispiels, die mit einer Bremsanlage verbunden ist, deren Bremsen auf die Befestigungsstützen einwirken.

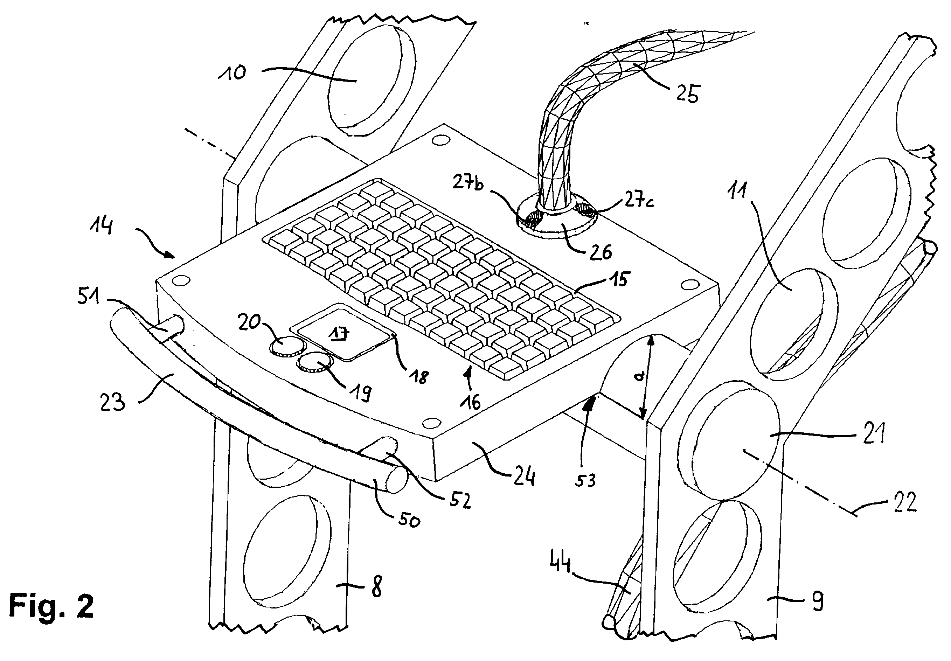

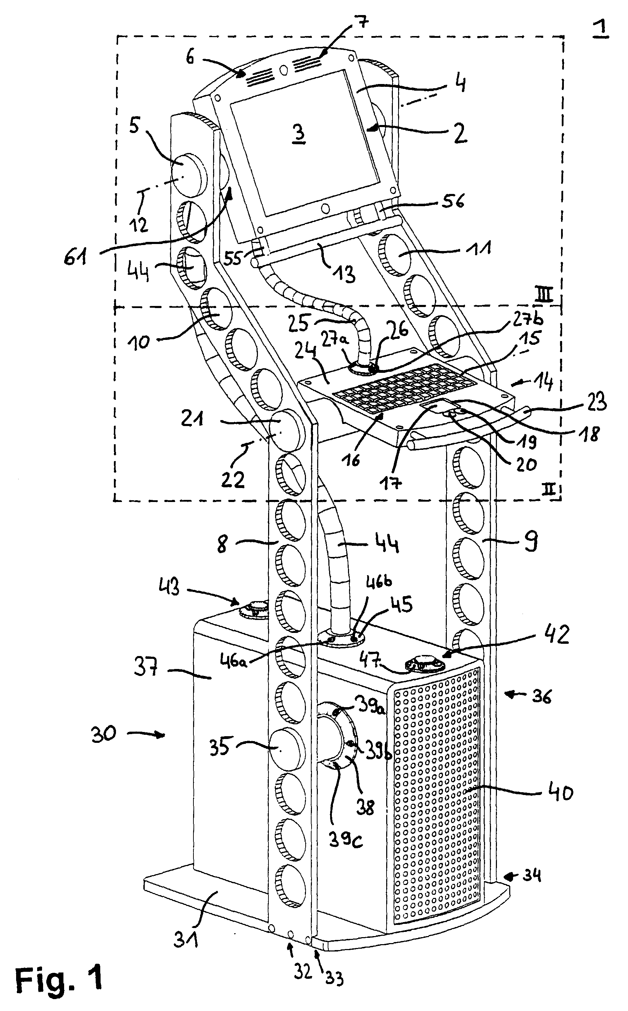

Fig. 1 zeigt in einer perspektivischen Ansicht ein erstes Ausführungsbeispiel eines erfindungsgemäßen Computerständers 1. Der Computerständer ist insbesondere für einen Terminal zum Zugriff auf Daten eines elektronischen Rechners ausgebildet. Er eignet sich jedoch auch für andere Anwendungen.

Der Computerständer 1 weist eine Bildschirmhaltevorrichtung 2 auf, die zur Befestigung eines elektronischen Sichtgerätes 3 an den Computerständer 1 dient. Die Bildschirmhaltevorrichtung 2 umfaßt einen Grundkörper 4 und einen mit dem Grundkörper 4 verbundenen Querholm 5. Der Grundkörper 4 der Bildschirmhaltevorrichtung 2 kann je nach Größe und Form des Sichtgerätes 3 unterschiedlich ausgeführt sein. In diesem Ausführungsbeispiel ist das Sichtgerät ein Flachbildschirm, so daß der Grundkörper 4 ebenfalls flach ausgebildet ist. Durch eine entsprechende Ausgestaltung des Grundkörpers 4 der Bildschirmhaltevorrichtung 2 kann auch ein anderes Sichtgerät 3 z. B. ein Röhrenmonitor in den Grundkörper 4 der Bildschirmhaltevorrichtung 2 eingebaut und an den Computerständer 1 befestigt werden. Um eine Tonwiedergabe zu ermöglichen, weist der Grundkörper 4 der Bildschirmhaltevorrichtung 2 Querschlitze 6, 7 auf, hinter denen in das Sichtgerät 3 eingebaute Lautsprecher oder externe Lautsprecher angeordnet sind.

Der Computerständer 1 weist Befestigungsstützen 8, 9 auf. Die Befestigungsstützen 8,9 weisen Aussparungen 10, 11 mit kreisförmigen Querschnitt auf. Dabei weist die Befestigungsstütze 8 mehrere Aussparungen 10 und die Befestigungsstütze 9 mehrere Aussparungen 11 auf, wobei sich jeweils zwei Aussparungen 10 und 11 gegenüberliegen. In die Aussparungen 10 und 11 läßt sich der Querholm 5 einfügen. Der Querholm 5 ist dann in den Aussparungen 10, 11 drehbar gelagert, so daß sich die Bildschirmhaltevorrichtung 2 um die Drehachse 12 drehen läßt. Die Bildschirmhaltevorrichtung 2 weist zum präzisen Einstellen der Neigung des in der Bildschirmhaltevorrichtung 2 eingebauten Sichtgerätes 3 einen Griff 13 auf, der außerdem verhindert, daß beim Drehen versehentlich das Sichtgerät 3 berührt wird.

In diesem Ausführungsbeispiel ist der Querholm 5 in den beiden obersten Aussparungen 10, 11 der Befestigungsstützen 8, 9 eingeführt, so daß die Bildschirmhaltevorrichtung 2 in der höchstmöglichen Stellung angeordnet ist. Durch Einführen des Querholms 5 in weiter unten angeordnete Aussparungen 10, 11 läßt sich die Bildschirmhaltevorrichtung 2 in eine tieferen Position anordnen, wodurch die Höhe des Sichtgeräts 3 auf individuelle Bedürfnisse angepaßt werden kann.

Der Computerständer 1 weist eine Tastaturhaltevorrichtung 14 auf, die zum Befestigen einer Tastatur an den Computerständer 1 dient. Die Tastaturhaltevorrichtung 14 weist eine Aussparung 15 auf, die den Zugriff auf die Tasten der Tastatur ermöglicht. Die Tastatur ist in diesem Fall als Tastatur mit einem integrierten berührungsempfindlichen Element, d. h. einem sogenannten touchpad 17 ausgeführt, das zusammen mit zwei ebenfalls in die Tastatur integrierten Tastern die Funktion einer Computermaus übernimmt. Um den Zugriff auf das touchpad 17 zu ermöglichen, weist die Tastaturhaltevorrichtung 14 eine Aussparung 18 auf. Die Betätigung der Tastern erfolgt mittels der Betätigungselemente 19, 20 der Tastaturhaltevorrichtung 14, die auf die Taster der Tastatur einwirken. Die Tastaturhaltevorrichtung 14 weist einen Querholm 21 auf, der in Aussparungen 10, 11 der Befestigungsstützen 8, 9 eingeführt ist, wobei der Querholm 21 in den Aussparungen 10, 11 drehbar gelagert ist, so daß die Tastaturhaltevorrichtung 14 um die Drehachse 22 drehbar ist. Um ein präzises Drehen um die Drehachse 22 zu ermöglichen, weist die Tastaturhaltevorrichtung 14 außerdem einen Griff 23 auf.

Der Grundkörper 24 der Tastaturhaltevorrichtung 14, in den die Tastatur eingebaut ist, ist mittels einer flexiblen ersten Kabelführung 25 mit der Bildschirmhaltevorrichtung 2 verbunden. Die Verbindung der ersten Kabelführung 25 mit dem Grundkörper 24 der Tastaturhaltevorrichtung 14 erfolgt mit einem Befestigungselement 26, das mit drei Schrauben 27a, 27b, 27c an den Grundkörper 24 geschraubt ist, wobei in der perspektivischen Ansicht der Fig. 1 nur die Schrauben 27a, 27b sichtbar sind. Die Länge der flexiblen ersten Kabelführung 25 ist so gewählt, daß die Höhe der Bildschirmhaltevorrichtung 2 und der Tastaturhaltevorrichtung 14 unabhängig voneinander gewählt werden können und zumindest sinnvolle Drehstellungen der Bildschirmhaltevorrichtung 2 und der Tastaturhaltevorrichtung 14 ermöglicht sind.

Der Computerständer 1 weist außerdem ein Rechnerschutzgehäuse 30 auf, das auf einem Standfuß 31 des Computerständers 1 steht. Der Standfuß 31 ist mit den Befestigungsstützen 8, 9 mittels einer Schraubverbindung 32 verbunden, wobei der Standfuß 31 Nuten 33, 34 aufweist, in die Befestigungsstützen 8, 9 eingefügt sind, so daß die Befestigungsstützen 8, 9 seitlich nicht über den Standfuß 31 hinausstehen.

Das Rechnerschutzgehäuse 30 ist mit Querholmen 35, 36 an die Befestigungsstützen 8, 9 durch Einfügen der Querholmen 35, 36 in die Aussparungen 10 ,11 befestigt. Der Querholm 36 ist durch die perspektivische Ansicht nicht dargestellt, er befindet sich gegenüber dem Querholm 35 und ist in die Befestigungsstütze 9 eingefügt. Der Querholm 35 ist mit einem an einen Grundkörper 37 des Rechnerschutzgehäuses 30 befestigten Befestigungselement 38 an das Rechnerschutzgehäuse 30 befestigt. Die Befestigung des Befestigungselements 38 erfolgt über Schrauben 39a, 30b, 39c. Ebenso ist der Querholm 36 an das Rechnerschutzgehäuse befestigt.

Das Rechnerschutzgehäuse dient zum Aufnehmen eines elektronischen Rechners, der ein Festplattenlaufwerk, ein CD-Laufwerk, eine Graphikkarte, eine Netzwerkkarte, ein Modem und Ähnliches umfassen kann. Das Rechnerschutzgehäuse 30 weist eine abnehmbare Vorderwand 40 und eine, in der Fig. 1 nicht dargestellte, abnehmbare Rückwand 41 auf, die mit Schließvorrichtungen 42, 43 sicherbar sind. Durch die Schließvorrichtungen 42, 43 sind die Vorderwand 40 und die Rückwand 41 mit dem Grundkörper 37 des Rechnerschutzgehäuses verbunden, wodurch der Rechner vor einem unberechtigten Zugriff geschützt ist. Die Vorderwand 40 und die Rückwand 41 sind vorzugsweise aus Lochbiech gefertigt, so daß eine ausreichende Belüftung des Rechners gegeben ist. Außerdem können durch die gelochte Vorderwand 40 Anzeigeeinrichtungen des Rechners betrachtet werden, die z. B. den An-/Aus-Betriebszustand oder einen Festplattenzugriff anzeigen. Die Schließvorrichtung 42 kann dadurch ausgebildet sein, daß ein Element der Vorderwand 40 in eine Aussparung des Grundkörpers 37 unterhalb der Schließvorrichtung 42 einrastet und nach Abschrauben der tellerförmigen Verschlußplatte 47 der Schließvorrichtung 42 gelöst werden kann. Die Schließvorrichtung 42 kann auch durch ein Schloß realisiert werden. Ebenso kann die Schließvorrichtung 43 ausgebildet sein.

Der Grundkörper 37 des Rechnerschutzgehäuses 30 ist mit einer flexiblen zweiten Kabelführung 44 mit dem Grundkörper 4 der Bildschirmhaltevorrichtung 2 verbunden. Durch die zweite Kabelführung 44 werden sowohl die für den Betrieb des Sichtgerätes 3 erforderlichen Kabel als auch die für den Betrieb der Tastatur erforderlichen Kabel geführt. Die für den Betrieb der Tastatur erforderlichen Kabel werden von der Bildschirmhaltevorrichtung 2 über die erste Kabelführung 25 zur Tastatur in der Tastaturhaltevorrichtung 14 weitergeleitet. Alternativ dazu kann das Rechnerschutzgehäuse auch direkt mit der Tastaturhaltevorrichtung 14 verbunden werden, wobei dann die erste Kabelführung 25 entfallen kann. Die zweite Kabelführung 44 ist durch das Befestigungselement 45 mittels mehrerer Schrauben, von denen nur die Schrauben 46a, 46b sichtbar sind, an den Grundkörper 37 des Rechnerschutzgehäuses 30 befestigt. Die Länge der flexiblen zweiten Kabelführung 44 ist so gewählt, daß eine beliebige Höhenverstellung der Bildschirmhaltevorrichtung 2 und sinnvolle Drehpositionen der Bildschirmhaltevorrichtung 2 ermöglicht sind.

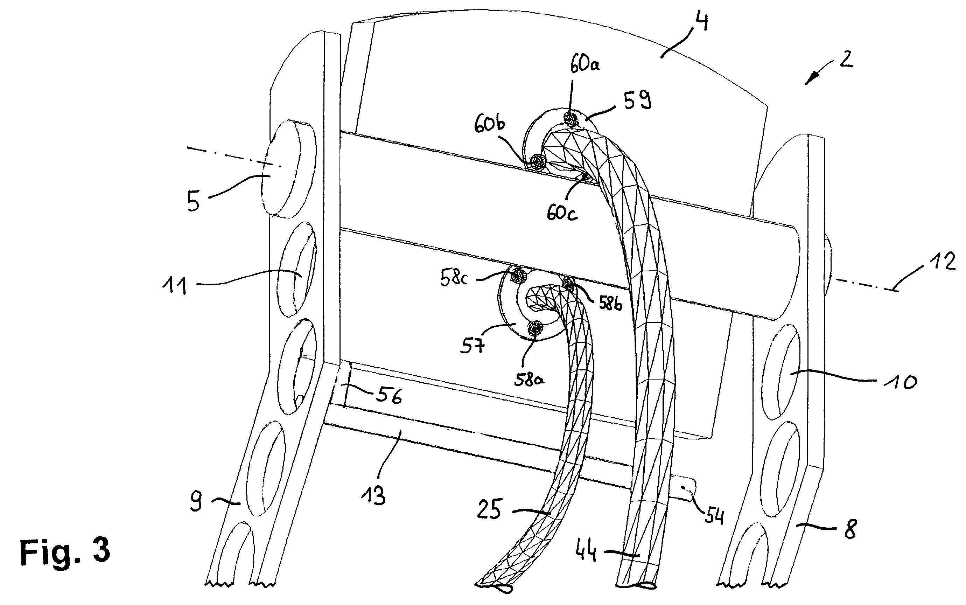

Fig. 2 zeigt den in Fig. 1 mit II bezeichneten Ausschnitt. Bereits beschriebene Elemente sind mit übereinstimmenden Bezugszeichen versehen, wodurch sich eine wiederholende Beschreibung erübrigt.

Der Griff 23 besteht aus einem gebogenen Griffelement 50, das einen kreisförmigen Querschnitt aufweist, und zwei Distanzelementen 51, 52, die das Griffelement 50 mit dem Grundkörper 24 der Tastaturhaltevorrichtung 14 verbinden.

Der Querholm 21 weist eine Aussparung 53 auf, deren Tiefe a ungefähr gleich dem Radius des Querholms 21 ist. In die Aussparung 53 ist der Grundkörper 24 der Tastaturhaltevorrichtung 14 eingebracht und mit dem Querholm 21 verbunden. Die Mittelachse des Querholms 21 definiert die Drehachse 22, um die die Tastaturhaltevorrichtung 14 drehbar ist.

Fig. 3 zeigt den in Fig. 1 mit III bezeichneten Ausschnitt. Die Blickrichtung ist dabei, anders als in der Fig. 1, von hinten in Richtung auf den Computerständer 1. Bereits beschriebene Elemente sind mit übereinstimmenden Bezugszeichen versehen, wodurch sich eine wiederholende Beschreibung erübrigt.

Der Griff 13 besteht aus einem zylinderförmigen Griffelement 54 und Distanzelementen (55, Fig.1), 56, die das Griffelement 54 mit dem Grundkörper 4 der Bildschirmhaltevorrichtung 2 verbinden. In der perspektivischen Ansicht der Fig. 3 ist das Distanzelement 55 von der zweiten Kabelführung 44 verdeckt.

Die erste Kabelführung 25 ist durch ein Befestigungselement 57, das mittels Schrauben 58a, 58b, 58c mit dem Grundkörper 4 der Bildschirmhaltevorrichtung 2 verbunden ist, mit der Bildschirmhaltevorrichtung 2 verbunden. Die zweite Kabelführung 44 ist durch ein Befestigungselement 59 mit dem Grundkörper 4 der Bildschirmhaltevorrichtung 2 verbunden. Hierzu ist das Befestigungselement 59 mittels Schrauben 60a, 60b, 60c mit dem Grundkörper 4 der Bildschirmhaltevorrichtung 2 verbunden.

Der Querholm 5 weist eine Aussparung (61, Fig. 1) auf, in die der Grundkörper 4 der Bildschirmhaltevorrichtung 2 eingefügt ist, wodurch der Grundkörper 4 mit dem Querholm 5 verbunden ist. Die Mittelachse des Querholms 5 definiert die Drehachse 12, um die die Bildschirmhaltevorrichtung 2 drehbar ist.

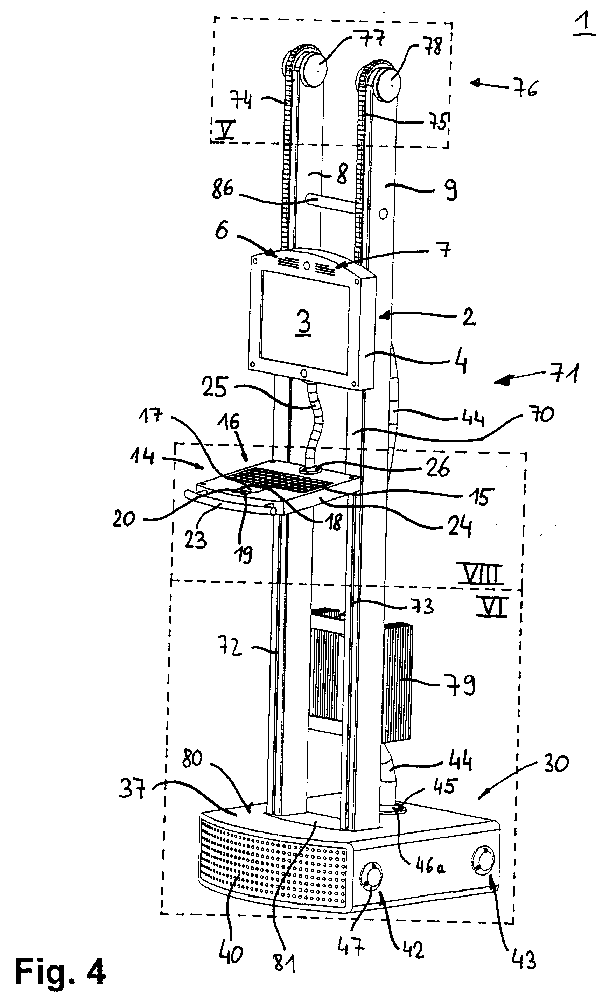

Fig. 4 zeigt ein zweites Ausführungsbeispiel eines erfindungsgemäßen Computerständers. Bereits beschriebene Elemente sind mit übereinstimmenden Bezugszeichen versehen, wodurch sich eine wiederholende Beschreibung erübrigt.

Der Computerständer 1 weist eine Bildschirmhaltevorrichtung 2 auf, in die ein Sichtgerät 3 eingebaut ist, das wie im ersten Ausführungsbeispiel als Flachbildschirm ausgeführt ist. Außerdem weist der Computerständer 1 eine Tastaturhaltevorrichtung 14 auf, die einen Grundkörper 24 umfaßt, in den eine Tastatur eingebaut ist. Der Grundkörper 4 der Bildschirmhaltevorrichtung 2 ist mit dem Grundkörper 24 der Tastaturhaltevorrichtung 14 durch ein starres Verbindungselement 70 verbunden, wodurch eine Bildschirm-Tastatur-Einheit 71 gebildet ist.

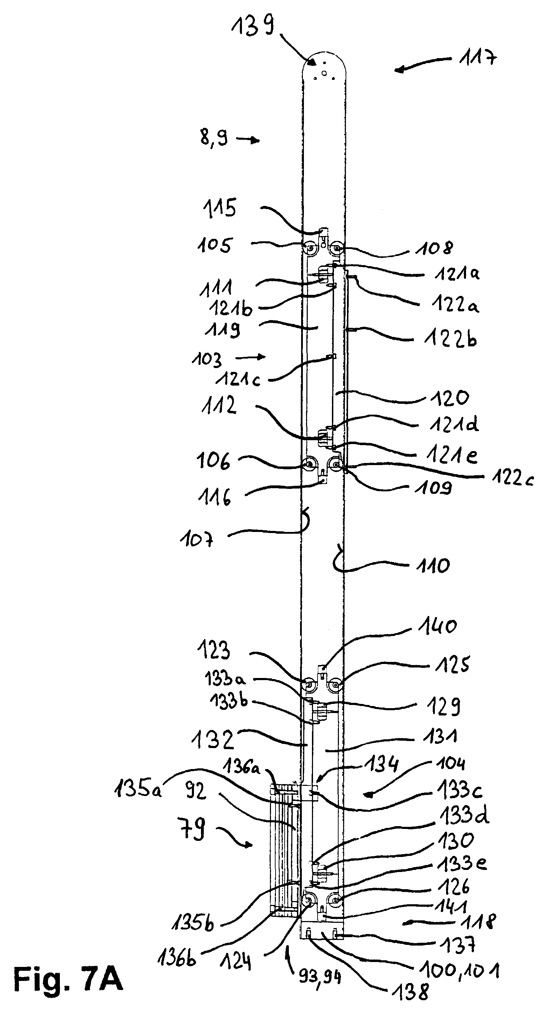

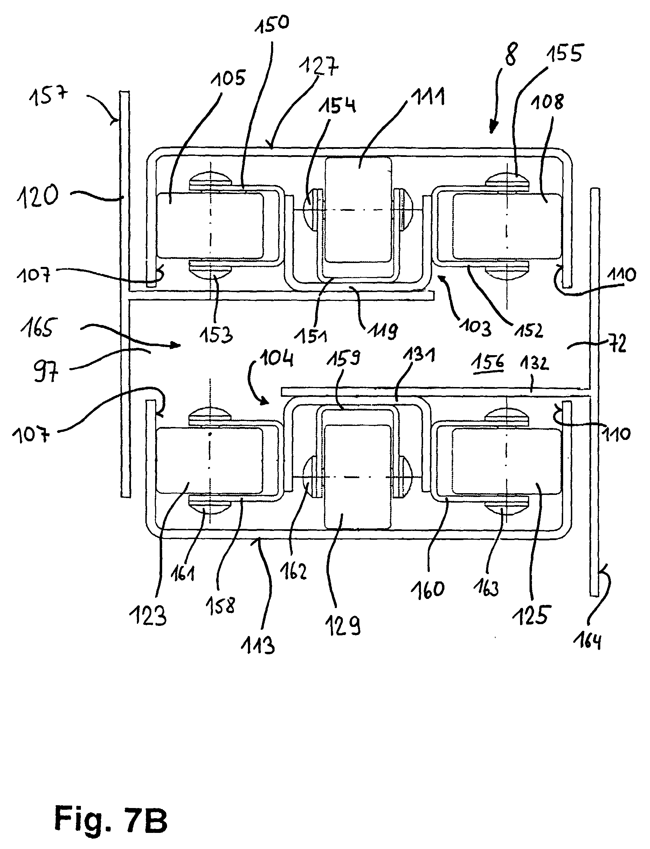

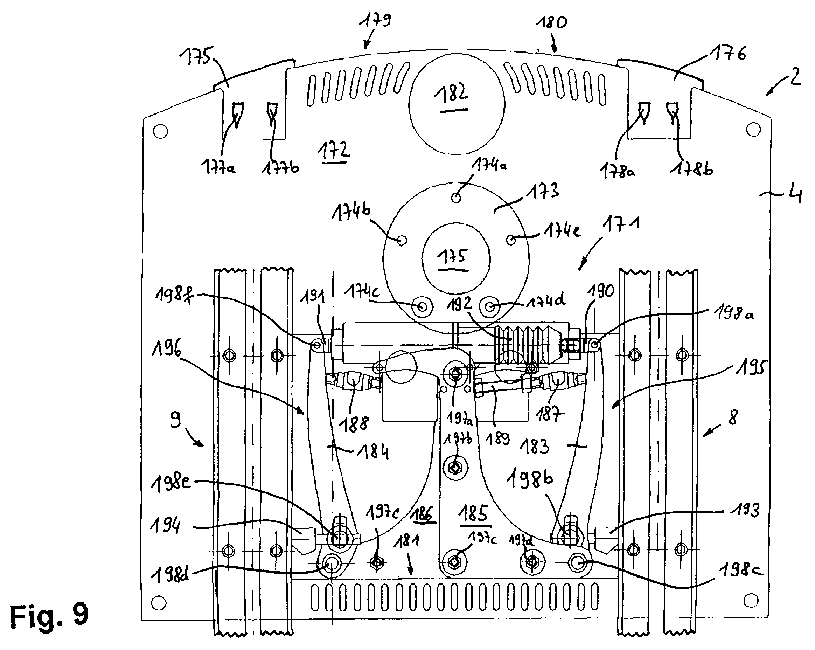

Die Befestigungsstützen 8, 9 weisen innere Aussparungen auf. Die Befestigungsstützen 8 und 9 weisen an ihrer Vorderseite Längsschlitze 72, 73 auf, durch die eine Verbindung der Bildschirm-Tastatur-Einheit 71 mit in den Befestigungsstützen 8, 9 angeordneten Rollenführungen möglich ist, wie es in der Beschreibung zu Fig. 7 behandelt ist. Die Bildschirmhaltevorrichtung 2 ist mit einer Bremsanlage verbunden, die in der Beschreibung zu Fig. 9 behandelt ist. Die Bremsanlage verhindert ein Verschieben der Bildschirm-Tastatur-Einheit 71 längs der Befestigungsstützen 8, 9, wobei die Bremsen der Bremsanlage zum Verschieben der Bildschirm-Tastatur-Einheit 71 gelöst werden können. Da die Bildschirmhaltevorrichtung 2 und die Tastaturhaltevorrichtung 14 der Bildschirm-Tastatur-Einheit 71 einen festen Abstand zueinander aufweisen, ist die Länge der ersten Kabelführung 25 durch den Abstand der Bildschirmhaltevorrichtung 2 zu der Tastaturhaltevorrichtung 14 gegeben. Die Länge der zweiten Kabelführung 44 ist so gewählt, daß eine maximale Höhenverstellung der Bildschirm-Tastatur-Einheit 71 ermöglicht ist. In diesem Ausführungsbeispiel ist es besonders vorteilhaft, daß die Tastaturhaltevorrichtung mit der Bildschirmhaltevorrichtung 2 und nicht dem Rechnerschutzgehäuse 30 verbunden ist, da ansonsten zwei lange, flexible Kabelführungen zu dem Rechnerschutzgehäuse 30 zu führen sind.

Die Bildschirmhaltevorrichtung 2 ist mit zwei Ketten 74, 75 verbunden, die um am oberen Ende 76 des Computerständers 1 angeordnete Lager 77, 78 geführt sind. Die Ketten 74, 75 laufen daher an der Vorderseite der Befestigungsstützen 8, 9 nach oben zu den Lagern 77, 78 und von den Lagern 77, 78 an der Rückseite des Computerständers 1 nach unten, wo sie mit einem Gegengewicht 79 verbunden sind. Die Masse des Gegengewichtes 79 ist vorzugsweise so bemessen, daß sie die Gewichtskraft der Bildschirm-Tastatur-Einheit 71 kompensiert.

Das Rechnerschutzgehäuse 30 ist in diesem Ausführungsbeispiel liegend angeordnet und bildet den Standfuß des Computerständers 1. Auf der Seite 80 des Grundkörpers 37 des Rechnerschutzgehäuses 30, ist eine Verbindungsplatte 81 vorgesehen, mittels der die Befestigungsstützen 8, 9 mit dem Grundkörper 37 des Rechnerschutzgehäuses 30 verbunden sind. Die Verbindungsplatte 81 ist mit zwei Stützkörpern verbunden, die sich in die Aussparungen der Befestigungsstützen 8, 9 einfügen, so daß ein Verkippen der Befestigungsstützen 8, 9 verhindert ist. Um die Stabilität des Computerständers 1 weiter zu verbessern, sind die Befestigungsstützen 8, 9 mit einem Abstandhalter 86 verbunden, der in Abstand zwischen den Befestigungsstützen 8, 9 konstant hält.

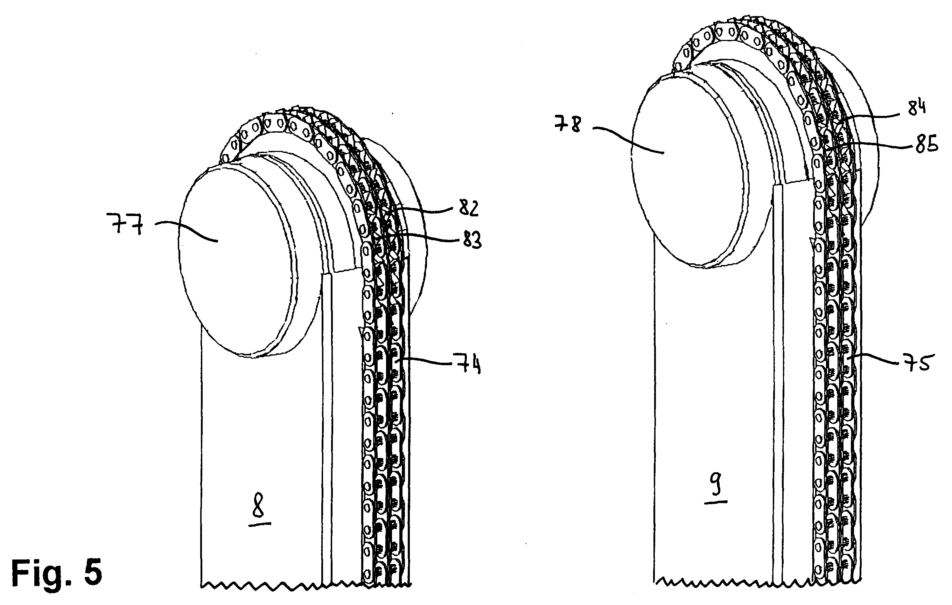

Fig. 5 zeigt den in Fig. 4 mit V bezeichneten Ausschnitt aus einer gegenüber der Fig. 4 veränderten Perspektive. Bereits beschriebene Elemente sind mit übereinstimmenden Bezugszeichen versehen, wodurch sich eine wiederholende Beschreibung erübrigt.

Auf dem Lager 77 sind zwei Kettenblätter 82, 83 montiert, die in die Kettenglieder der als Doppelkette ausgebildeten Kette 74 eingreifen. Ebenso sind auf dem Lager 78 die Kettenblätter 84, 85 montiert, die in die Kettenglieder der als Doppelkette ausgeführten Kette 75 eingreifen. Zum Bremsen einer Bewegung der Bildschirm-Tastatur-Einheit 71, kann eine Bremse vorgesehen sein, die auf die Kettenblätter 82 - 85 oder auf die Lager 77, 78 einwirkt. Die Bremse kann auch betätigbar sein, so daß nur bei einer Betätigung der Bremse ein Verschieben der Bildschirm-Tastatur-Einheit 71 möglich ist. Durch die Kettenblätter 82 - 85 sind die Ketten 74, 75 an den Befestigungsstützen 8, 9 des Computerständers 1 geführt, wobei die Führung sowohl seitlich als auch längs zu den Befestigungsstützen erfolgt.

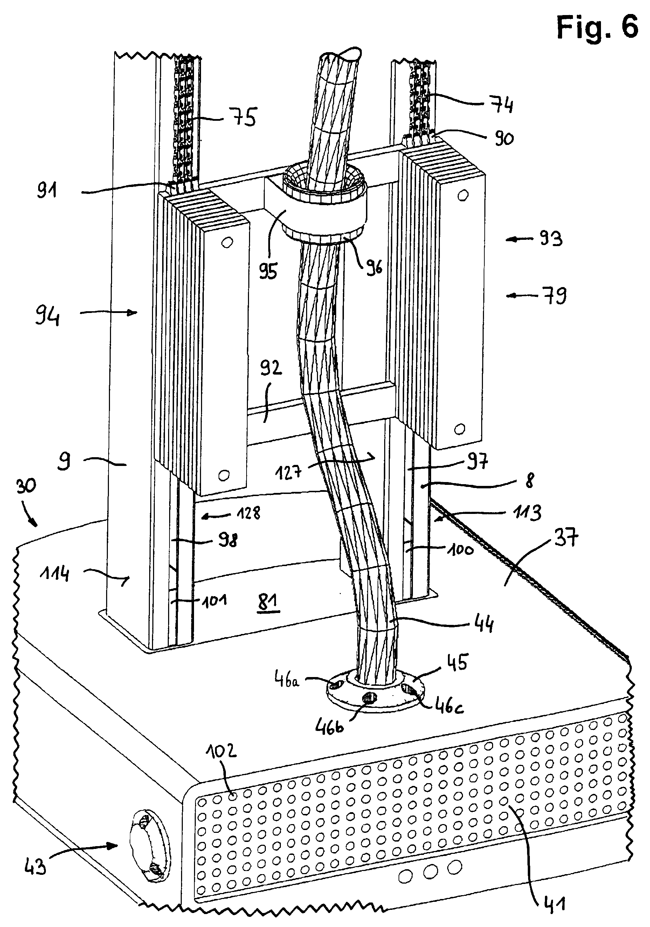

Fig. 6 zeigt den in Fig. 4 mit VI bezeichneten Ausschnitt in einer Ansicht von hinten auf den Computerständer 1. Bereits beschriebene Elemente sind mit übereinstimmenden Bezugszeichen versehen, wodurch sich eine wiederholende Beschreibung erübrigt.

Die Ketten 74, 75 sind mittels der Befestigungselemente 90, 91 mit einem Grundkörper 92 des Gegengewichtes 79 verbunden. An den Grundkörper 92 des Gegengewichtes 79 sind mehrere Gewichtsplatten 93, 94 befestigt, wobei durch die Anzahl der Gewichtsplatten 93, 94 die Masse des Gegengewichtes 79 variierbar ist. An den Grundkörper 92 des Gegengewichtes 79 ist mittels eines Befestigungselements 95, ein Führungselement 96 befestigt. Das Führungselement 96 weist eine mittige Aussparung auf, durch die sich die zweite Kabelführung 44 erstreckt. Durch das Führungselement 96 ist die zweite Kabelführung 44 an dem Computerständer 1 fixiert. Bei einer Höhenverstellung der Bildschirm-Tastatur-Einheit 71, wird auch das Gegengewicht 79 in der Höhe verstellt, wobei sich das Führungselement 96 entlang der zweiten Kabelführung 44 verschiebt und die zweite Kabelführung 44 weiterhin, nur jetzt in veränderter Höhe, an dem Computerständer 1 fixiert ist. Die Rückseite der Befestigungsstützen 8, 9 weist Schlitze 97, 98 auf, durch die der Grundkörper 92 des Gegengewichts 79 mit in den Befestigungsstutzen 8, 9 angeordneten Rollenführungen verbunden ist.

Die Verbindungsplatte 81 ist mit den Stützkörpern 100, 101 verbunden, die sich in die innere Aussparung der Befestigungsstützen 8, 9 einfügen. Die Befestigungsstützen 8, 9 sind mit den Stützkörper 100, 101 verbunden, wodurch ein Verkippen der Befestigungsstutzen 8, 9 verhindert ist.

Die Rückwand 41 ist mit dem Grundkörper 37 des Rechnerschutzgehäuses 30 lösbar verbunden. Durch die Schließvorrichtung 43 ist das Rechnerschutzgehäuse 30 vor einem Abnehmen der Rückwand 41 gesichert. Die Rückwand 41 weist eine Vielzahl von Aussparungen 102 mit kreisförmigen Querschnitt auf, durch die eine Belüftung des Rechners in dem Rechnerschutzgehäuse 30 gegeben ist.

Die Befestigungsstützen 8, 9 können auch mit der verbindungsplatte 81 verschweißt werden. Dazu sind die Befestigungsstutzen 8, 9 und die Verbindungsplatte 81 aus geeigneten metallischen Werkstoffen zu fertigen. Die Stützkörper 100, 101 können dann entfallen.

Fig. 7A zeigt einen Schnitt durch eine Befestigungsstütze 8 oder 9 des zweiten Ausführungsbeispiels in der Rollenführungen 103, 104 angeordnet sind. Die Rollenführung 104 ist mit dem Gegengewicht 79 verbunden. Zur Vereinfachung sind die übrigen Bauteile des Computerständers 1 in dieser Ansicht nicht dargestellt.

Die Rollenführung 103 weist Rollen 105, 106, die sich an der inneren Rückwand 107 abstützen, Rollen 108, 109, die sich an der inneren Vorderwand 110 der Befestigungsstütze 8 oder 9 abstützen und Rollen 111, 112 auf, die sich an der Innenseite der Seitenwand (113, Fig. 6) abstützen. Die Rollenführung 103 weist elastische Pufferelemente 115, 116 auf, die bei einem Anstoßen der Rollenführung 103 am oberen Ende 117 oder am unteren Ende 118 der Befestigungsstütze 8 oder 9, wie es z. B. beim Zusammen- oder Auseinanderbauen des Computerständers 1 oder bei einer Fehlfunktion auftreten kann, eine Beschädigung von Bauteilen des Computerständers 1 zu verhindern. Die Rollen 105, 106, 108, 109, 111 und 112 sind drehbar gelagert an dem Grundkörper 119 der Rollenführung 103 befestigt. An dem Grundkörper 119 ist außerdem eine Befestigungsvorrichtung 120 mit Schrauben 121a bis 121e befestigt. Mittels der Schrauben 122a bis 122c und ggf. mit weiteren Verbindungselementen, wird die Bildschirmhaltevorrichtung (2, Fig. 4) bzw. die Bildschirm-Tastatur-Einheit (71, Fig. 4) an die Befestigungsvorrichtung 120 der Rollenführung 103 befestigt.

Die Rollenführung 104 weist Rollen 123, 124, die sich an der inneren Rückwand 107 der Befestigungsstütze 8 oder 9 abstützen und Rollen 125, 126, die sich an der inneren Vorderwand 110 der Befestigungsstütze 8 oder 9 abstützen, auf. Die Rollen 105, 106, 108 und 109 der Rollenführung 103 stützen sich auf der Seite der Seitenwand 113 oder 114 der Befestigungsstütze 8 oder 9 an der inneren Rückwand 107 bzw. der inneren Vorderwand 110 ab, während sich die Rollen 123 bis 126 der Rollenführung 104 auf der Seite der Seitenwand 127 oder 128 der Befestigungsstütze 8 oder 9 abstützen, so daß die Rollen 105, 106 der Rollenführung 103 auf einer Fläche laufen, die von der Fläche, auf der die Rollen 123, 124 der Rollenführung 104 laufen, von dem Schlitz 100 oder 101 der Befestigungsstütze 8 oder 9 getrennt ist. Entsprechend laufen die Rollen 108, 109 der Rollenführung 103 auf einer Fläche, die von der Fläche, auf der die Rollen 125, 126 der Rollenführung 104 laufen, durch den Längsschlitz 72 oder 73 der Befestigungsschlitze 8 oder 9 getrennt ist. Die Rollen 129, 130 der Rollenführung 104 stützen sich auf der Innenseite der Seitenwand 127 oder 128 der Befestigungsstütze 8 oder 9 ab. Die Rollen 105, 106, 108, 109, 111 und 112 der Rollenführung 103 laufen daher auf anderen Bahnen als die Rollen 123, 124, 124 und 126 der Rollenführung 104. Der Grundkörper 119 und die Befestigungsvorrichtung 120 sind so ausgebildet, daß sie weniger als die Hälfte des Querschnitts des Innenraums der Befestigungsstütze 8 oder 9 beanspruchen. Ebenso sind ein Grundkörper 131 an dem die Rollen 123, 124, 125, 126, 129 und 130 drehbar befestigt sind und die mit dem Grundkörper 131 verbundene Befestigungsvorrichtung 121 so ausgebildet, daß sie weniger als die Hälfte des Querschnitts des Innenraums der Befestigungsstütze 8 oder 9 beanspruchen. Die beiden Rollenführungen 103 und 104 sind außerdem versetzt zueinander angeordnet, so daß die Rollenführungen 103 und 104 aneinander vorbeilaufen können.

Die Verbindung der Befestigungsvorrichtung 132 an den Grundkörper 131 ist durch Schrauben 133a - 133e gegeben. Der Grundkörper 92 des Gegengewichts 79 ist im Bereich 134 in den Grundkörper 131, Rollenführung 104 eingehakt. Durch die Schrauben 135a, 135b ist der Grundkörper 92 des Gegengewichts 79 außerdem mit der Befestigungsvorrichtung 132 der Rollenführung 104 verbunden. Die Gewichtsplatten 93, 94 sind mit den Schrauben 136a, 136b an den Grundkörper 92 des Gegengewichts 79 befestigt.

In der Fig. 7A ist außerdem der Stützkörper 100 oder 101 dargestellt, der in die Befestigungsstütze 8 oder 9 eingefügt ist und Gewindebohrungen 137, 138 aufweist, die zum Anschrauben des Stützkörpers 100 oder 101 an die Verbindungsplatte (81, Fig. 6) dienen. Außerdem sind Gewindebohrungen 139 in der Befestigungsstütze 8 oder 9 dargestellt, die zum Befestigen des Lagers 77 oder 78 an die Befestigungsschlitze 8 oder 9 dienen. Die Rollenführung 104 weist wie die Rollenführung 103 Pufferelement 140, 141 auf.

Fig. 7B zeigt einen horizontalen Schnitt durch die Befestigungsstütze 8, in der ein weiteres Ausführungsbeispiel für die Rollenführungen 103, 104 gegeben ist. Die Rollenführung in der Befestigungsstütze 9 kann entsprechend gegeben sein.

Die Rollenführung 103 weist einen Grundkörper 119 auf, der mit den Rollenhalterungen 150, 151, 152 verbunden ist. Die Rollenhalterungen 150, 151 und 152 weisen Lager 153, 154 und 155 auf, auf denen die Rollen 105, 111 und 108 drehbar gelagert sind. Die Rolle 105 liegt an der inneren Rückwand 107 an. Die Rolle 108 liegt an der inneren Vorderwand 110 an und die Rolle 111 liegt an der Innenseite der Seitenwand 127 der Befestigungsstütze 8 an. Die Rollenführung 103 weist drei weitere Rollen auf, die unterhalb der Rollen 105, 108 und 111 angeordnet sind und in der Ansicht der Fig. 7B von diesen verdeckt werden. Der Grundkörper 199 der Rollenführung 103 ist mit einer Befestigungsvorrichtung 120 verbunden, die ein T-Profil aufweist. Durch die Befestigungsvorrichtung 120 wird die im Innenraum 156 der Befestigunsstütze 8 angeordnete Rollenführung 103 mit der Bildschirm-Tastatur-Einheit 71 verbunden. Zur Verbindung können z. B. in der Fläche 157 der Befestigungsvorrichtung 120 Gewindebohrungen vorgesehen sein.

Entsprechend der Rollenführung 103 besteht die Rollenführung 104 aus dem Grundkörper 131, der mit den Rollenhalterungen 158, 159, 160 verbunden ist, die Lager 161, 162, 163 aufweisen, auf denen die Rollen 123, 129, 125 gelagert sind. Der Grundkörper 131 der Rollenführung 104 ist mit einer Befestigungsvorrichtung 132 verbunden, an die das Gegengewicht 79 befestigt ist, wozu in der Fläche 164 Gewindebohrungen vorgesehen sein können.

Die Rollenführungen 103, 104 sind versetzt zueinander angeordnet, wobei zwischen diesen und den Befestigungsvorrichtungen 120, 132 immer ein Zwischenraum 165 ausgebildet ist, so daß die Rollenführungen 103, 104 mit den Befestigungsvorrichtungen 120, 132 aneinander vorbeibewegt werden können.

Wie die Rollenführung 103 weist auch die Rollenführung 104 drei weitere Rollen auf, die unterhalb der Rollen 123, 129, 125 angeordnet sind.

Die Rollenführungen des Computerständers 1 sind nicht auf die in den Fig. 7A, 7B beschriebenen Ausführungsbeispiele beschränkt. Insbesondere können anstelle der Rollen auch Gleitelemente oder Zahnräder vorgesehen sein.

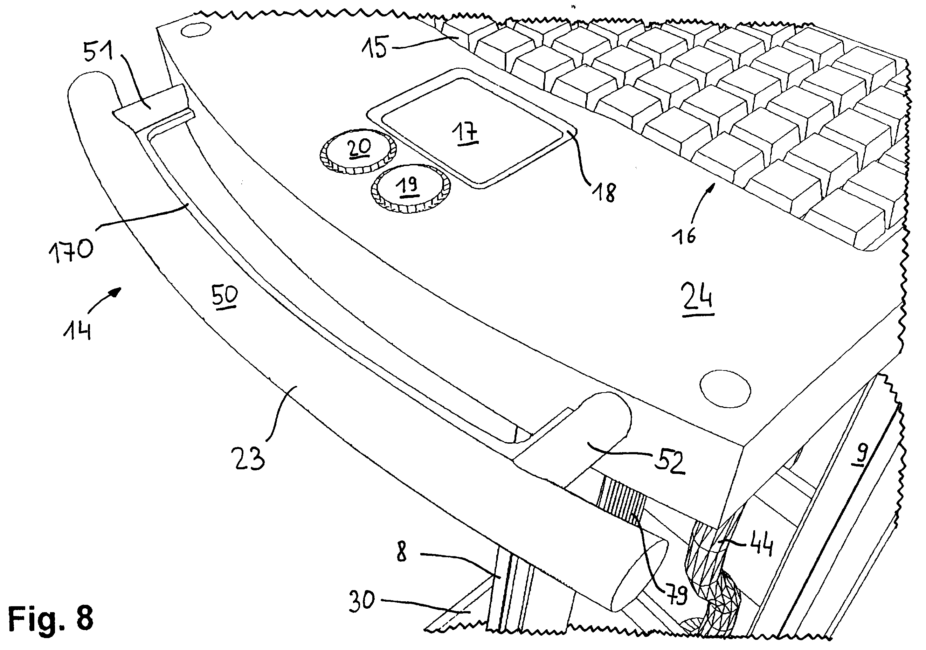

Fig. 8 zeigt den in Fig. 4 mit VIII bezeichneten Ausschnitt. Bereits beschriebene Elemente sind mit übereinstimmenden Bezugszeichen versehen, wodurch sich eine wiederholende Beschreibung erübrigt.

Das Griffelemente 50 und die Distanzelemente 51, 52 weisen Aussparungen auf, in die ein U-förmiger Metallbügel eingefügt ist, der einen Schalter 170 bildet. Durch Betätigen des Schalters 170 des Griffs 14 wird ein Lösen der Bremsen einer Bremsanlage ausgeführt, so daß eine Höhenverstellung der Bildschirm-Tastatur-Einheit 71 ermöglicht ist. Dadurch daß der Schalter 170 in den Griff 23 integriert ist, wird beim Greifen des Griffs 23 zum Höhenverstellen der Bildschirm-Tastatur-Einheit 71 ein Lösen der Bremsanlage ausgeführt, so daß eine Höhenverstellung besonders ergonomisch erfolgt. Dabei ist es vorteilhaft, wenn sich der Schalter 170 selbst zurückstellt, so daß er die Funktion eines Tasters aufweist.

Fig. 9 zeigt die Bildschirmhaltevorrichtung 2 des Computerständers 1 des zweiten Ausführungsbeispiels, die mit einer Bremsanlage 171 verbunden ist, in einer Ansicht, die eine Rückwand 172 des Grundkörpers 4 der Bildschirmhaltevorrichtung 2 zeigt.

Die Rückwand 172 des Grundkörpers 4 der Bildschirmhaltevorrichtung 2 weist einen Flansch 173 mit Gewindebohrungen 174a - 174e auf, der mit dem Befestigungselement 79 verbunden wird zur Verbindung des Grundkörpers 4 der Bildschirmhaltevorrichtung 2 mit der zweiten Kabelführung 44. Die durch die Kabelführung 44 geleiteten Kabel werden von der Kabelführung 44 durch die Aussparung 175 in der Rückwand 172 in dem Grundkörper 4 geführt.

Der Grundkörper 4 der Bildschirmhaltevorrichtung 2 ist mit Befestigungselementen 175, 176 verbunden, die zur Verbindung der Bildschirmhaltevorrichtung 2 mit den Ketten 74, 75 dienen. Zur Verbindung der Ketten 74, 75 mit dem Befestigungselementen 175, 176 werden jeweils zwei nebeneinander liegende Kettenglieder der als Doppelketten ausgeführten Ketten 74, 75 in die Dorne 177a, 177b, bzw. 178a, 178b eingehängt.

Zur Belüftung des Grundkörpers 4 der Bildschirmhaltevorrichtung 2 sind in der Rückwand 172 Entlüftungsschlitze 179, 180, 181 und eine kreisförmige Aussparung 182 vorgesehen.

Die Bremsanlage 171 umfaßt zwei Hebelelemente 183, 184, zwei Stützelemente 185, 186, zwei Druckfederelementen 187, 188, zwei Übertragungsbolzen, von denen nur der Übertragungsbolzen 189 dargestellt ist, zwei Verbindungselemente 190, 191 und zumindest ein Zugelement 192, das in diesem Ausführungsbeispiel elektromagnetisch ausgeführt ist. Außerdem weist die Bremsanlage 171 zwei mit den Hebelelementen 183, 184 verbundene Bremsen 193, 194 auf, die zum Bremsen auf die Befestigungsstützen 8, 9 einwirken.

Durch den nahezu symmetrischen Aufbau der Bremsanlage 171 gliedert sich die Bremsanlage 171 in einen rechten Teil 195 und einen linken Teil 196. Im folgenden wird die Funktionsweise des rechten Pfeils 195 der Bremsanlage 171 beschrieben. Die Funktionsweise des linken Teils 196 der Bremsanlage 171 ergibt sich entsprechend.

Das Druckfederelement 187 beaufschlagt das Hebelelement 183 mit einer Druckkraft, die dieses in eine größere Anpreßkraft der Bremse 193 auf die Befestigungsstütze 8 übersetzt. Dadurch wird ein Verstellen des Grundkörpers 4 relativ zu der Befestigungsstütze 8 verhindert. Durch Betätigen des Zugelementes 192 mittels des Schalters (170, Fig. 8) wird über das beweglich an dem Hebelelement 183 befestigten Verbindungselement 190 eine Kraft entgegen der Druckkraft des Druckfederelementes 187 erzeugt, welche die Bremse 193 von der Befestigungsstütze 8 abhebt. Da gleichzeitig die Bremse 194 von der Befestigungsstütze 9 abhebt, kann dann eine Verschiebung der Grundkörpers 4 der Bildschirmhaltevorrichtung 2 relativ zu den Befestigungsstützen 8, 9 erfolgen. In diesem Ausführungsbeispiel wirkt das Zugelement 192 sowohl auf das Hebelelement 183 als auch auf das Hebelelement 184 ein. Es können auch zwei Zugelemente 192 vorgesehen sein, von denen eines auf das Hebelelement 183 und eines auf das Hebelelement 184 einwirkt.

Die Bremsanlage 171 ist mit mehreren Schrauben z. B. 197a - 197e und an den Verbindungsstellen 198a - 198f verbunden. Dabei sind zumindest die an den Verbindungsstellen 198a - 198f miteinander verbundenen Bauteile der Bremsanlage 171 an den Verbindungsstellen 198a - 198f gegeneinander drehbar verbunden.

Die Erfindung ist nicht auf die beschriebenen Ausführungsbeispiele beschränkt. Insbesondere kann der Computerständer 1 auch weitere Haltevorrichtungen aufweisen, z. B. zum Befestigen eines Druckers an dem Computerständer 1.

### Bezugszeichenliste

- 1: Computerständer
- 2: Bildschirmhaltevorrichtung
- 3: Sichtgerät
- 4: Grundkörper
- 5: Querholm
- 6: Querschlitze
- 7: Querschlitze
- 8: Befestigungsstütze
- 10: Aussparung
- 11: Aussparung
- 12: Drehachse
- 13: Griff
- 14: Tastaturhaltevorrichtung
- 16: Tasten
- 17: touchpad
- 18: Aussparung
- 19: Betätigungselement
- 20: Betätigungselement
- 21: Querholm
- 22: Drehachse
- 23: Griff
- 24: Grundkörper
- 25: erste Kabelführung
- 26: Befestigungselement
- 27a-27c: Schraube
- 30: Rechnerschutzgehäuse
- 31: Standfuß
- 32: Schraubverbindung
- 33: Nut
- 34: Nut
- 35: Querholm
- 36: Querholm
- 37: Grundkörper
- 38: Befestigungselement
- 39a-39c: Schraube
- 40: Vorderwand
- 41: Rückwand
- 42: Schließvorrichtung
- 43: Schließvorrichtung
- 44: zweite Kabelführung
- 45: Befestigungselement
- 46a-46c: Schraube
- 47: Verschlußplatte
- 50: Griffelement
- 51: Distanzelement
- 52: Distanzelement
- 53: Aussparung
- 54: Griffelement
- 55: Distanzelement
- 56: Distanzelement
- 57: Befestigungselement
- 58a-58c: Schrauben
- 59: Befestigungselement
- 60a-60c: Schrauben
- 61: Aussparung
- 70: Verbindungselement
- 71: Bildschirm-Tastatur-Einheit
- 72: Längsschlitz
- 73: Längsschlitz
- 74: Kette
- 75: Kette
- 76: oberes Ende
- 77: Lager
- 78: Lager
- 79: Gegengewicht
- 80: Seite
- 81: Verbindungsplatte
- 82: Kettenblatt
- 83: Kettenblatt
- 84: Kettenblatt
- 85: Kettenblatt
- 86: Abstandhalter
- 90: Befestigungselement
- 91: Befestigungselement
- 92: Grundkörper
- 93: Gewichtsplatten
- 94: Gewichtsplatten
- 95: Befestigungselement
- 96: Führungselement
- 97: Schlitz
- 98: Schlitz
- 100: Stützkörper
- 101: Stützkörper
- 102: Aussparung
- 103: Rollenführung
- 104: Rollenführung
- 105: Rolle
- 106: Rolle
- 107: innere Rückwand
- 108: Rolle
- 109: Rolle
- 110: innere Vorderwand
- 111: Rolle
- 112: Rolle
- 113: Seitenwand
- 114: Seitenwand
- 115: Pufferelement
- 116: Pufferelement
- 117: oberes Ende
- 118: unteres Ende
- 119: Grundkörper
- 120: Befestigungsvorrichtung
- 121a-121e: Schraube
- 122a-122c: Schraube
- 123: Rolle
- 124: Rolle
- 125: Rolle
- 126: Rolle
- 127: Seitenwand
- 128: Seitenwand
- 129: Rolle
- 130: Rolle
- 131: Grundkörper
- 132: Befestigungsvorrichtung
- 133a-133e: Schraube
- 134: Bereich
- 135a, 135b: Schraube
- 136a, 136b: Schraube
- 137: Gewindebohrung
- 138: Gewindebohrung
- 139: Gewindebohrungen
- 140: Pufferelement
- 141: Pufferelement
- 150: Rollenhalterung
- 151: Rollenhalterung
- 152: Rollenhalterung
- 153: Lager
- 154: Lager
- 155: Lager
- 156: Innenraum
- 157: Fläche
- 158: Rollenhalterung
- 159: Rollenhalterung
- 160: Rollenhalterung
- 161: Lager
- 162: Lager
- 163: Lager
- 164: Fläche
- 165: Zwischenraum
- 170: Schalter
- 171: Bremsanlage
- 172: Rückwand
- 173: Flansch
- 174a-174e: Gewindebohrung
- 175: Befestigungselement
- 176: Befestigungselement
- 177a, 177b: Dorn
- 178a, 178b: Dorn
- 179: Entlüftungsschlitze
- 180: Entlüftungsschlitze
- 181: Entlüftungsschlitze
- 182: kreisförmige Aussparung
- 183: Hebelelement
- 184: Hebelelement
- 185: Stützelement
- 186: Stützelement
- 187: Druckfederelement
- 188: Druckfederelement
- 189: Übertragungsbolzen
- 190: Verbindungselement
- 191: Verbindungselement
- 192: Zugelement
- 193: Bremse
- 194: Bremse
- 195: rechter Teil
- 196: linker Teil
- 197a-197e: Schraube
- 198a-198f: Verbindungsstelle

## Patentansprüche

1. Computerständer (1), insbesondere für ein Terminal zum Zugriff auf Daten eines elektronischen Rechners, mit
einer Bildschirmhaltevorrichtung (2) zum Befestigen eines elektronischen Sichtgerätes an dem Computerständer (1) und einer Tastaturhaltevorrichtung (14) zum Befestigen einer Tastatur (16) an dem Computerständer (1),
wobei die Bildschirmhaltevorrichtung (2) und die Tastaturhaltevorrichtung (14) höhenverstellbar angeordnet sind,
**dadurch gekennzeichnet**,
daß zwei Befestigungsstützen (8, 9) vorgesehen sind, die jeweils an im wesentlichen gegenüberliegenden Verbindungsstellen mit der Bildschirmhaltevorrichtung (2) und der Tastaturhaltevorrichtung (14) verbunden sind und
daß die Befestigungsstützen (8, 9) zumindest mittelbar mit einem Rechnerschutzgehäuse (30) zum Aufnehmen eines elektronischen Rechners verbunden sind.

2. Computerständer nach Anspruch 1,
**dadurch gekennzeichnet**,
daß das Rechnerschutzgehäuse (30) eine abnehmbare Vorderwand (40) und eine abnehmbare Rückwand (41) aufweist, die mit Schließvorrichtungen (42, 43) sicherbar sind.

3. Computerständer nach Anspruch 1 oder 2,
**dadurch gekennzeichnet**,
daß die Bildschirmhaltevorrichtung (2), die Tastaturhaltevorrichtung (14) und das Rechnerschutzgehäuse (30) mittels flexiblen Kabelführungen (25, 44) miteinander verbunden sind.

4. Computerständer nach Anspruch 3,
**dadurch gekennzeichnet**,
daß die Tastaturhaltevorrichtung (14) mit der Bildschirmhaltevorrichtung (2) mittels einer flexiblen ersten Kabelführung (25) verbunden ist und
daß die Bildschirmhaltevorrichtung (2) mit dem Rechnerschutzgehäuse (30) mittels einer flexiblen zweiten Kabelführung (44) verbunden ist.

5. Computerständer nach einem der Ansprüche 1 bis 4,
**dadurch gekennzeichnet**,
daß die Bildschirmhaltevorrichtung (2) und/oder die Tastaturhaltevorrichtung (14) zum Neigen des Sichtgerätes (3) beziehungsweise der Tastatur (16) um eine Drehachse (12, 22) drehbar ist.

6. Computerständer nach Anspruch 5,
**dadurch gekennzeichnet**,
daß die Bildschirmhaltevorrichtung (2) und/oder die Tastaturhaltevorrichtung (14) einen Griff (13, 23) zum präzisen Einstellen der Neigung des Sichtgerätes beziehungsweise der Tastatur (16) aufweist.

7. Computerständer nach einem der Ansprüche 1 bis 6,
**dadurch gekennzeichnet**,
daß die Befestigungsstützen (8, 9) jeweils mehrere Aussparungen (10, 11) aufweisen, die zumindest horizontal versetzt zueinander angeordnet sind, wobei an jeweils zwei sich gegenüberliegenden Aussparungen (10, 11) der Befestigungsstützen (8, 9) die Bildschirmhaltevorrichtung (2) oder die Tastaturhaltevorrichtung (14) mit den Befestigungsstützen (8, 9) verbunden ist.

8. Computerständer nach Anspruch 7,
**dadurch gekennzeichnet**,
daß die Aussparungen (10, 11) einen kreisförmigen Querschnitt aufweisen und
daß die Bildschirmhaltevorrichtung (2) und/oder die Tastaturhaltevorrichtung (14) einen Querholm (5, 21) aufweist, der in zwei sich gegenüberliegenden Aussparungen (10, 11) drehbar gelagert ist, wobei durch die Mittelachse des Querholms die Drehachse (12, 22) der Bildschirmhaltevorrichtung (2) beziehungsweise der Tastaturhaltevorrichtung (14) gegeben ist.

9. Computerständer nach einem der Ansprüche 1 bis 4,
**dadurch gekennzeichnet**,
daß die Bildschirmhaltevorrichtung (2) und die Tastaturhaltevorrichtung (14) mittels eines starren Verbindungselementes (70) verbunden sind wodurch eine Bildschirm-Tastatur-Einheit (71) gebildet ist.

10. Computerständer nach Anspruch 9,
**dadurch gekennzeichnet**,
daß eine Höhenverstellung der Bildschirm-Tastatur-Einheit (71) mittels einer Bremsanlage (171) blockierbar ist.

11. Computerständer nach Anspruch 10,
**dadurch gekennzeichnet**,
daß die Bildschirm-Tastatur-Einheit (71) zur Höhenverstellung der Bildschirm-Tastatur-Einheit (71) einen Griff (23) aufweist und
daß der Griff (23) einen Schalter (170) aufweist, der ein Lösen der Bremsen (193, 194) der Bremsanlage (171) ermöglicht.

12. Computerständer nach Anspruch 10 oder 11,
**dadurch gekennzeichnet**,
daß zur Entlastung der Bremsen (193, 194) der Bremsanlage (171) ein Gegengewicht (79) auf zwei mit der Bildschirm-Tastatur-Einheit (71) verbundene, jeweils entlang der Befestigunsstützen (8, 9) laufende Ketten (74, 75) oder Seile einwirkt.

13. Computerständer nach Anspruch 12,
**dadurch gekennzeichnet**,
daß die Bildschirm-Tastatur-Einheit (71) und das Gegengewicht (79) mittels in Aussparungen der Befestigungsstützen (8, 9) angeordneten Rollenführungen (103, 104) geführt sind.

14. Computerständer nach Anspruch 13,
**dadurch gekennzeichnet**,
daß sich die gemeinsam in einer Aussparung einer Befestigungsstütze (8, 9) angeordneten Rollenführungen (103, 104) jeweils an drei Innenflächen der Aussparung mittels Rollen (105, 106, 108, 109, 111, 112, 123-126, 129, 130) abstützen, wobei die Rollenführungen (103, 104) versetzt zueinander angeordnet sind.

15. Computerständer nach einem der Ansprüche 1 bis 14,
**dadurch gekennzeichnet**,
daß das Rechnerschutzgehäuse (30) den Standfuß des Computerständers (1) bildet.
